Europäisches Patentamt

European Patent Office

Office européen des brevets

(11) Veröffentlichungsnummer : **0 351 657 B1**

# (12) EUROPÄISCHE PATENTSCHRIFT

(45) Veröffentlichungstag der Patentschrift :
**28.10.92 Patentblatt 92/44**

(21) Anmeldenummer : **89112348.1**

(22) Anmeldetag : **06.07.89**

(51) Int. Cl.$^5$ : **B60T 8/00**, F16D 66/00

---

(54) **Bremseinrichtung für Schienenfahrzeuge oder Züge.**

---

(30) Priorität : **22.07.88 DE 3824985**

(43) Veröffentlichungstag der Anmeldung :
**24.01.90 Patentblatt 90/04**

(45) Bekanntmachung des Hinweises auf die
Patenterteilung :
**28.10.92 Patentblatt 92/44**

(84) Benannte Vertragsstaaten :
**DE ES FR GB IT**

(56) Entgegenhaltungen :
**EP-A- 0 189 082
US-A- 3 537 551
US-A- 3 797 612
US-A- 3 966 008**

(73) Patentinhaber : **KNORR-BREMSE AG
Moosacher Strasse 80 Postfach 401060
W-8000 München 40 (DE)**

(72) Erfinder : **Gebhardt, Hannes
Auweg 43
W-8046 Garching (DE)**
Erfinder : **Gehr, Kaspar
Vogelbeerenweg 26
W-8011 Kirchheim (DE)**
Erfinder : **Saumweber, Eckart, Dr.
Mühlstrasse 15
W-8035 Gauting (DE)**

EP 0 351 657 B1

**Beschreibung**

Die Erfindung betrifft eine Bremseinrichtung für eine Vielzahl von Rädern aufweisende Schienenfahrzeuge oder Züge, wobei die den Rädern zugeordneten, vermittels Bremszylinder zuspannbaren Reibungsbremsen in getrennt betätigbare Bremsgruppen unterteilt sind, mit einer Steuervorrichtung, welche als Bremsparameter ein Bremsanforderungssignal für das Schienenfahrzeug bzw. den Zug, die Temperatur und gegebenenfalls die Reibkraft und-/oder einem Bremsdruck entsprechende Meßsignale wenigstens einer Reibungsbremse jeder Bremsgruppe verarbeitet und aus diesen für die einzelnen Bremsgruppen gesonderte, die Betätigungsstärke der jeweiligen Bremsgruppe steuernde Bremssignale erstellt, derart, daß durch wechselnde Betätigung bzw. Betätigungsstärke der einzelnen Bremsgruppen ein Übersteigen einer vorbestimmten Temperaturgrenze an jeder Bremsgruppe vermieden und zugleich als Summe der Bremswirkungen der einzelnen Bremsgruppen eine dem Bremsanforderungssignal entsprechende Gesamtbremswirkung erreicht wird.

Eine derartige, insbesondere für Flugzeugbremsen vorgesehene, aber auch für Fahrzeugbremsen verwendbare Bremseinrichtung ist aus der EP-A 247 253 bekannt. Die Bremsgruppen sind hierbei auf einer oder auf mehrere Wellen verteilt angeordnet und sind einem oder mehreren Rädern zugeordnet. Diese bekannte Bremseinrichtung arbeitet derart, daß bei einer üblichen Bremsung zu Beginn eine erste Bremsgruppe betätigt wird, und wenn deren Temperatur die erwähnte Temperaturgrenze erreicht, oberhalb derer eine Beschädigung der Reibungsbremse auftreten könnte, werden die Reibungsbremsen dieser ersten Bremsgruppe gelöst und die Reibungsbremsen einer zweiten Bremsgruppe entsprechend betätigt. Die Reibungsbremsen der ersten Bremsgruppe können sich nun abkühlen, und wenn die Reibungsbremsen der zweiten Bremsgruppe die Temperaturgrenze erreichen, kann wieder auf eine Betätigung der ersten Bremsgruppe zurückgeschaltet werden. Selbstverständlich können auch mehr als zwei Bremsgruppen vorgesehen sein, wobei dann die einzelnen Bremsgruppen nacheinander betätigt werden. Falls alle vorhandenen Bremsgruppen die Temperaturgrenze überschreiten, wird die die niedrigste Temperatur aufweisende Bremsgruppe am stärksten und die die höchste Temperatur aufweisende Bremsgruppe am schwächsten betätigt, um insgesamt eine dem Bremsanforderungssignal entsprechende Abbremsung zu erzielen. Des weiteren weist die bekannte Bremseinrichtung auch Meßvorrichtungen zum Erfassen der erreichten Bremswirkungen an den einzelnen Bremsgruppen auf, wodurch es möglich ist, beispielsweise durch Fadingerscheinungen oder Druckmittelverluste an einzelnen Bremsgruppen verursachte Abfälle von Bremswirkungen durch entsprechend stärkere Betätigung anderer Bremsgruppen auszugleichen. Bei dieser bekannten Bremseinrichtung besteht jedoch die Möglichkeit, daß die Reibungsbremsen der einzelnen Bremsgruppen unterschiedlich verschleißen, so daß schließlich die Reibungsbremsen an einer Bremsgruppe ihren Verschleißendzustand erreichen, während an anderen Bremsgruppen die Reibungsbremsen noch eine große Verschleißreserve aufweisen. Hierdurch wird ein häufiger, vorzeitiger und materialverschwendender Austausch von Reibmaterialien an den Reibungsbremsen des gesamten Flugzeuges bzw. Fahrzeuges verursacht. Ein weiterer Mangel der bekannten Bremseinrichtung ist darin zu sehen, daß die einzelnen Bremsgruppen jeweils bis zum Erreichen der Grenztemperatur an ihren Reibungsbremsen betätigt werden, bevor sie abgeschaltet werden. Es sind jedoch viele Reibwerkstoffe bekannt, welche nach Erkenntnissen der Anmelderin sowohl im niedrigen, aber auch im hohen Temperaturbereich entsprechend der Temperaturgrenze ein sehr ungünstiges Verschleißverhalten aufweisen, in einem etwas unterhalb der Temperaturgrenze liegenden Temperaturbereich, welcher oberhalb 100°C liegt und bis ca 250°C reichen kann, dagegen einen nur sehr geringen Verschleiß bei guten Reib- und damit Bremswirkungen besitzen. Die Reibungsbremsen der bekannten Bremseinrichtung arbeiten oftmals außerhalb dieses verschleißgünstigen Temperaturbereiches der Reibwerkstoffe.

Es ist demgemäß Aufgabe der Erfindung, eine Bremseinrichtung der eingangs genannten Art unter Nutzung der vorstehend erwähnten Erkenntnisse der Anmelderin derart auszubilden, daß ihre Reibungsbremsen soweit möglich in einem verschleißgünstigen Temperaturbereich betrieben werden, wobei jedoch zugleich darauf geachtet werden soll, daß an den Reibwerkstoffen keine Verglasungen, wie sie bei häufigen, schwachen Bremsungen bekannt sind, auftreten.

Diese Aufgabe wird nach der Erfindung für eine Bremseinrichtung der eingangs genannten Art durch eine Ausbildung gemäß den im kennzeichnenden Teil des Patentanspruches 1 angegebenen Merkmalen gelöst.

Es ist besonders vorteilhaft, daß bei Ausbildung einer Bremseinrichtung nach den Merkmalen des Patentanspruches 1 ein gleichmäßiges Verschleißen aller Reibungsbremsen der Breimseinrichtung erreichbar ist, wodurch ein Austausch von Reibwerkstoffen an der gesamten Bremseinrichtung nur dann erforderlich wird, wenn alle Reibungsbremsen dieser Bremseinrichtung zumindest nahezu ihren Verschleißendzustand erreicht haben. Die Austauscharbeiten sind also nur relativ selten erforderlich und es wird kein Reibwerstoff vergeudet.

Die Unteransprüche zeigen vorteilhafte Ausbildungsmöglichkeiten der Erfindung für eine derartige Bremseinrichtung auf.

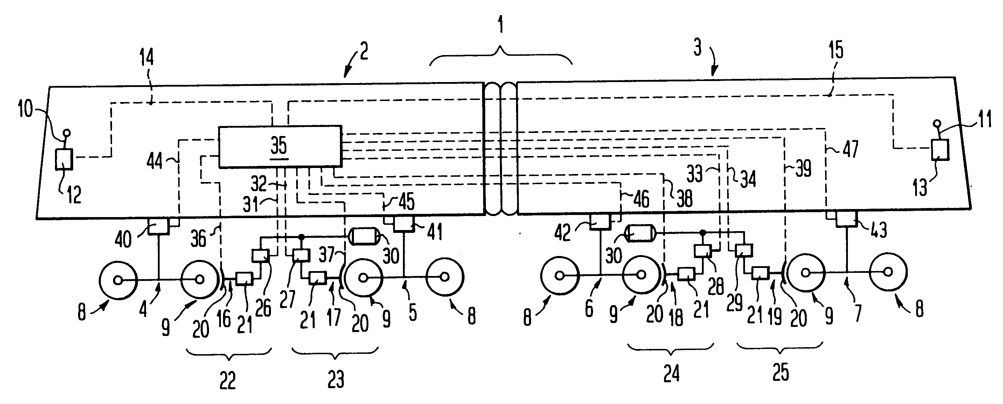

In der Zeichnung ist ein Ausführungsbeispiel für eine nach der Erfindung ausgebildete Bremseinrichtung in ihren wesentlichen Teilen schematisch dargestellt.

Die Zeichnung zeigt einen Triebwagenzug 1, welcher aus zwei kurzgekuppelten Einzelfahrzeugen 2 und 3 zusammengesetzt ist. Jedes Einzelfahrzeug ist mit zwei Drehgestellen 4,5 bzw. 6,7 ausgestattet, deren jedes zwei Radsätze 8 und 9 aufweist. Jeder Radsatz 8,9 weist wie üblich zwei durch eine Welle starr miteinander verbundene Räder auf. In den Führerständen an den einander abgewandten Stirnseiten der Einzelfahrzeuge 2 und 3 des Triebwagenzuges 1 sind über einen Handgriff 10 bzw. 11 vom Fahrzeugführer betätigbare Gebergeräte 12 bzw. 13 angeordnet, mit welchen in Leitungen 14 bzw. 15 der jeweiligen Situation angemessene Bremsanforderungssignale für den Triebwagenzug 1 einsteuerbar sind.

In der Zeichnung sind Reibungsbremsen 16,17,18 und 19 dargestellt, welche den Radsätzen 9 der Drehgestelle 4 bis 7 zugeordnet sind und welche jeweils einen Reibklotz 20 sowie einen Bremszylinder 21 zeigen. Abweichend zu dieser Darstellung ist es selbstverständlich, daß auch den anderen Radsätzen 8 der Drehgestelle 4 bis 7 Reibungsbremsen zugeordnet sein können, wobei alle Reibungsbremsen vorzugsweise nicht als Klotzbremse, wie in der Zeichnung der Einfachheit halber angedeutet, sondern als Scheibenbremse ausbildbar sind. Die Reibungsbremsen 16 bis 19 bilden vier Bremsgruppen 22,23,24 und 25, wobei die Druckmittelbeaufschlagung jedes Bremszylinbders 21 durch ein jeder Bremsgruppe 22 bis 25 zugeordnetes Regelventil 26,27,28,29 geregelt ist. Die Bremszylinder der erwähnten, nicht dargestellten Reibungsbremsen für die Radsätze 8 können ebenfalls an das Regelventil 26 bis 29 des jeweiligen Drehgestelles 4 bis 7 angeschlossen sein und gehören dann der jeweiligen Bremsgruppe 22 bis 25 zu, sie können jedoch auch mit einem eigenen, nicht dargestellten Regelventil ausgestattet sein und eigene Bremsgruppen bilden.

Abweichend zum bisher beschriebenen Ausführungsbeispiel können auch Einzel - oder Losräder vorgesehen sein, deren Bremsen getrennt betätigbare Bremsgruppen bilden.

Die Regelventile 26 bis 29 sind jeweils in eine Druckmittelverbindung zwischen einer in der Zeichnung als Luftbehälter dargestellten Druckmittelquelle 30 und den Bremszylinder 21 der jeweiligen Bremsgruppe 22 bis 25 eingeordnet, sie sind über Steuerleitungen 31,32,33 bzw. 34 mit Bremssignalen ansteuerbar und steuern entsprechend ihrer Ansteuerung mit diesen Bremssignalen die Beaufschlagungsdruckhöhe für die ihnen nachgeordneten Bremszylinder 21.

Im Einzelfahrzeug 2 ist eine Steuervorrichtung 35 angeordnet, welche zur Signalverarbeitung und -erstellung Mikrocomputer enthält. Die Leitungen 14 und 15 führen zur Steuervorrichtung 35 und leiten dieser die Bremsanforderungssignale zu. Weiterhin führen die Steuerleitungen 31 bis 34 zur Steuervorrichtung 35, sie sind gegebenenfalls mehradrig ausgebildet und führen einerseits in der Steuervorrichtung 35 für die einzelnen Bremsgruppen 22 bis 25 getrennt erstellte Bremssignale den Regelventilen 26 bis 29 zu und leiten andererseits den in den Regelventilen 26 bis 29 erstellten Bremsdrücken entsprechende Meßsignale der Steuervorrichtung 35 zu. Von den Reiborganen, gemäß der Zeichnung den Reibklötzen 20 der einzelnen Bremsgruppen 22 bis 25, führen gegebenenfalls mehradrige Meßleitungen 36,37,38 bzw. 39 zur Steuervorrichtung 35 und leiten dieser Meßsignale zu, welche der Temperatur, dem Verschleißzustand und gegebenenfalls auch der Bremsstärke an den einzelnen Reiborganen bzw. Reibklötzen 20 proportional sind. Es ist zweckmäßig, jedem Drehgestell 4 bis 7 der Einzelfahrzeuge 2 und 3 je eine Abwiegevorrichtung 40,41,42 bzw. 43 zuzuordnen, welche über weitere Meßleitungen 44,45,46 bzw. 47 der Fahrzeugbelastung entsprechende Meßsignale der Steuervorrichtung 35 zuführen. Weiterhin können jedem Radsatz 8 und/oder 9 nicht dargestellte Drehzahlgeber zugeornet sein, welche über ebenfalls nicht dargestellte, weitere Leitungsverbindungen der Steuervorrichtung 35 Meßsignale über das momentane Drehverhalten dieser Radsätze zuführen; während Brems- und Anfahrvorgängen des Triebwagenzuges 1 können diese Meßsignale in der Steuervorrichtung 35 in bekannter Weise derart ausgewertet werden, daß das Auftreten von Blockier- bzw. Schleudervorgängen festgestellt wird und in die Steuerleitungen 31 bis 34 diesen Blockier- bzw. Schleudervorgängen entgegenwirkend modifizierte Bremssignale eingesteuert werden.

Bei Inbetriebnahme des Triebfahrzeuges, beispielsweise in Abhängigkeit vom Druckaufbau in den Druckmittelquellen 30, bildet die Steuervorrichtung 35 aus ihr durch die Meßleitungen 36 bis 39 zugeführten Meßsignalen über den Verschleißzustand der Reiborgane bzw. Reibklötze 20 der einzelnen Bremsgruppen 22 bis 25 eine Prioritätenfolge für deren Betätigung, derart, daß beim nachfolgenden Einsteuern eines Bremsanforderungssignals durch Betätigen eines Gebergerätes 12 oder 13 zuerst die den geringsten Verschleiß aufweisende Bremsgruppe 22,23,24 oder 25 und nachfolgend in der Reihenfolge anwachsenden Verschleißzustandes die übrigen Bremsgruppen 22 bis 25 betätigt werden. Die Betätigung erfolgt dabei selbstverständlich nicht zeitlich versetzt zueinander, sondern in Abhängigkeit vom anstehenden Bremsanforderungssignal gegebenenfalls gleichzeitig, derart, daß die Steuervorrichtung 35 in die Steuerleitung 31,32,33 bzw. 34 der den geringsten Verschleiß aufweisenden Bremsgruppe 22 bis 25 anfänglich ein bis zu einer kräftigen Abbremsung führenden Bremssignal einsteuert, welches das Regelventil 26 bis 29 dieser Bremsgruppe 22 bis 25 veranlaßt, den Bremszylinder 21 dieser Bremsgruppe mit einen entsprechenden Bremsdruck aus der Druckmittelquelle 30 zu beaufschlagen. Falls dieses Ansteuern einer Bremsgruppe 22 bis 25 eine bezogen auf das anstehende Bremsanforderungssignal zu schwache Bremsung ergibt, steuert die Steuervorrichtung 35 in der Reihenfolge steigenden Verschleißzustandes gleichzeitig auch eine zweite, dritte und erforderlichenfalls auch die vierte Bremsgruppe mit einem deren Betätigung bewirkenden Bremssignal an, derart, daß die Gesamtbremswirkung dem anstehenden Bremsanforderungssignal 14 entspricht. Die jeweilige Bremswirkung wird dabei in der Steuervorrichtung 35 aus dieser durch die Steuerleitungen 31 bis 34 zugeführten, dem jeweiligen Bremsdruck entsprechenden Meßsignalen und/oder durch die Meßleitungen 36 bis 39 zugeführten, der jeweiligen Bremsstärke entsprechenden Meßsignalen ermittelt.

Während des anschließenden Bremsvorganges werden die Reiborgane bzw. Bremsklötze 20 der betätigten Bremsgruppen 22 bis 25 durch Reibung erhitzt, wodurch sich ihr Verschleißverhalten ändert: Für diese Reiborgane bzw. Reibklötze 20 werden derartige, bekannte Reibwerkstoffe verwendet, deren spezifischer Verschleiß innerhalb eines oberhalb ca. 100 bis ca 200°C liegenden, bis zumeist über ca. 250°C reichenden Temperaturbereiches minimal ist; bei niedrigerer Temperatur und bei den angegebenen Temperaturbereich übersteigender Temperatur weisen diese Werkstoffe ein mitunter sich wesentlich verschlechterndes Verschleißverhalten, also größeren spezifischen Verschleiß bei schlechtem Reibverhalten, auf.

Es sei angenommen, daß eine Teilbremsung vorliege, bei welcher eine kräftige Betätigung der beispielsweise geringsten Verschleiß aufweisenden Bremsgruppe 22 sowie eine schwächere Betätigung der beispielsweise zweitgeringsten Verschleiß aufweisenden Bremsgruppe 24 zum Erzielen einer dem anstehenden Bremsanforderungssignal adäquaten Gesamtbremswirkung ausreiche. Durch die kräftige Betätigung der Bremsgruppe 22 gelangen deren Reibelemente bzw. deren Reibklotz 20 rasch in den angegebenen Temperaturbereich günstigsten, spezifischen Verschleißes, das Erreichen dieses Temperaturbereiches wird der Steuervorrichtung 35 durch entsprechende Meßsignale in der Meßleitung 36 gemeldet. Diese veranlaßt daraufhin eine Reduzierung der Betätigungsstärke für die Bremsgruppe 22 und eine Verstärkung der Betätigung für die Bremsgruppe 24 derart, daß auch die letztere alsbald in den erwähnten Temperaturbereich günstigsten spezifischen Verschleißes gelangt. Die Änderung der Betätigungsstärken für die Bremsgruppen 22 und 24 erfolgt dabei selbstverständlich derart, daß die dem Bremsanforderungssignal adäquate Gesamtbremswirkung konstant erhalten bleibt. Sollten durch die Temperaturänderungen Reibwertänderungen an den Reiborganen bzw. Reibklötzen 20 auftreten, so ändern sich die der Steuervorrichtung 35 durch die Meßleitungen 36 und 38 zugeführten, der Bremsstärke entsprechenden Meßsignale entsprechend, wodurch die Steuervorrichtung 35 veranlaßt wird, durch entsprechende Änderung der durch die Steuerleitungen 31 und 33 ausgesteuerten Bremssignale diese Reibwertänderungen zu kompensieren, derart, daß die Bremswirkung der Bremsgruppen 22 und 24 und damit auch die Gesamtbremswirkung konstant bleibt. Die Bremsgruppen 23 und 25, welche den dritt- bzw. viertstärksten Verschleiß aufweisen, bleiben in diesem Beispielsfall unbetätigt.

Bei Änderungen des anstehenden Bremsanforderungssignals durch entsprechendes Verstellen des Gebergerätes 12 bzw. 13 wird vermittels der Steuervorrichtung 35 die Betätigungsstärke der verschlissensten, betätigten Bremsgruppe, im Beispielsfall der Bremsgruppe 24 derart verringert oder bis zu einer mittelstarken Bremsung verstärkt und, falls dies nicht ausreicht, eine Betätigung der nächststark verschlissenen Bremsgruppe 23 oder 25 aufgenommen, daß sich wiederum eine dem geänderten, anstehenden Bremsanforderungssignal adäquate Gesamtbremswirkung ergibt, wobei angenommen ist, daß sich die Reiborgane bzw. Bremsklötze 20 der bereits mittelstark betätigten Bremsgruppen, im Beispielsfall also der Bremsgruppe 22, im erwähnten Temperaturbereich minimalen, spezifischen Verschleißes befinden.

Sollte bei andauernder Bremsung die Temperatur an den Reiborganen bzw. Reibklötzen 20 einer mittelstark betätigten Bremsgruppe, beispielsweise der Bremsgruppe 22, weiter steigen, so daß sie den erwähnten Temperaturbereich nach oben verläßt, so wird die Betätigung dieser Bremsgruppe, im Beispielsfalle also der Bremsgruppe 22, derart geschwächt, daß die Temperatur wieder in den erwähnten Temperaturbereich sinkt und sich in diesem stabilisiert. Dabei wird jedoch keine derart schwache Bremsung eingesteuert, daß ein Verglasen der Reiborgane bzw. Bremsklötze erfolgt, stattdessen kann die betroffene Bremsgruppe vielmehr völlig abgeschaltet werden. Durch entsprechendes Verstärken der Betätigung einer anderen Bremsgruppe oder Aufnahme der Betätigung an einer anderen Bremsgruppe, wobei die verschleißzustandsabhängige Reihenfolge eingehalten wird, wird hierbei die Gesamtbremswirkung entsprechend dem anstehenden Bremsanforderungssignal konstant gehalten. Kühlt sich die geringstverschlissene Bremsgruppe, im Beispielsfall die Bremsgruppe 22, an ihren Reibklötzen 20 unter den erwähnten Temperaturbereich ab, so wird die Betätigung dieser Bremsgruppe wieder aufgenommen bzw. verstärkt, wobei die Betätigung einer mehr verschlissenen Bremsgruppe, im Beispielsfall der Bremsgruppe 24 oder 23, entsprechend gemindert wird. Auch an den anderen Bremsgruppen wird die Betätigung entsprechend derart gesteuert, daß der Temperaturbereich minimalen Verschleißes möglichst erreicht und gehalten wird.

Nach dem Lösen und gegebenenfalls Abkühlen der Reiborgane bzw. Reibklötze 20 der Reibungsbremsen 16 bis 19 wird deren momentaner Verschleißzustand erneut in der Steuervorrichtung 35 zu einer neuen Prioritätenreihenfolge für die Betätigung der Bremsgruppen 22 bis 25 entsprechend deren ansteigenden Verschleißzustands-Reihenfolge verarbeitet, bei der nächsten Bremsung erfolgt die Reihenfolge der Betätigung der Bremsgruppen 22 bis 25 anhand dieser neuen Prioritätenliste. Sollte jedoch eine erneute Bremsung vor Abkühlen der Reiborgane bzw. Reibklötze 20 erfolgen, so werden die einzelnen Bremsgruppen 22 bis 25 entsprechend der ursprünglichen, ersten Prioritätenfolge betätigt. Hierdurch wird erreicht, daß die Reibelemente bzw. Reibklötze 20 weitestmöglich innerhalb des Temperaturbereiches minimalen Verschleißes betrieben werden, insgesamt also sich ein minimaler Verschleiß ergibt.

Insgesamt ist also eine Hilfsvorrichtung zum Ermitteln des Verschleißzustandes wenigstens einer, gegebenenfalls auch mehrerer Reibungsbremsen 16 bis 19 einer jeden Bremsgruppe 22 bis 25 vorgesehen und die Steuervorrichtung 35 weist eine Auswahleinrichtung auf, welche der Betätigung einer geringer verschlissene Reibungsbremsen aufweisenden Bremsgruppe Priorität vor der Betätigung einer stärker verschlissene Reibungsbremsen aufweisenden Bremsgruppe verleiht. Die Prioritäten- bzw. Betätigungs-Reihenfolge für die Bremsgruppen 22 bis 25 wird dabei in Abhängigkeit von den momentanen Temperaturen an den Reibklötzen 20 der einzelnen Bremsgruppen 22 bis 25 derart abgeändert, daß bei Überschreiten des erwähnten, bestimmten Temperaturbereiches an den Bremsen einer bevorzugt zu betätigenden Bremsgruppe die Betätigung dieser Bremsgruppe bis zu ihrer Abkühlung in den Temperaturbereich geschwächt bzw. beendet und stattdessen die Betätigung einer nachfolgend zu betätigenden Bremsgruppe begonnen oder entsprechend verstärkt wird.

Zum Erfassen des momentanen Verschleißzustandes können die Reibungsbremsen 16 bis 19 mit nicht dargestellten Verschleißfühlern üblicher Bauart ausgestattet sein. Weiterhin kann die Steuervorrichtung 35 eine Integrationsvorrichtung beinhalten, welche gemäß bekannten Verschleißgesetzmäßigkeiten den Verschleiß der Reiborgane bzw. Reibklötze 20 der einzelnen Reibungsbremsen 16 bis 19 in Abhängigkeit von deren Betätigungsstärke und Betätigungszeit ermittelt und somit einen theoretischen, momentanen Verschleißzustand feststellt; die Prioritätenreihenfolge für die Betätigung der einzelnen Bremsgruppen 22 bis 25 kann anhand dieser theoretischen Verschleißzustände nach Inbetriebnahme der Bremseinrichtung zu Beginn einer jeden Bremsung, während einer Änderung des Bremsanforderungssignals oder auch ständig in Abhängigkeit vom aktuellen, theoretischen Verschleißzustand geändert werden. Die Meßsignale der erwähnten Verschleißfühler können bei dieser Ausbildung dazu dienen, in größeren, zeitlichen Abständen, vorzugsweise in Abhängigkeit von der Inbetriebnahme der Bremseinrichtung bzw. des Fahrzeuges oder Zuges, in Abhängigkeit von einem Bremsbeginn oder auch von einer Uhr gesteuert wenigstens einmal je Tag, die erwähnten, theoretischen Verschleißzustände entsprechend den tatsächlich bestehenden Verschleißzuständen zu korrigieren. In entsprechender Weise kann die Steuervorrichtung 35 eine weitere Integrationsvorrichtung aufweisen, welche die momentanen Temperaturen der Reibungsbremsen bzw. deren Bremsklötze 20 getrennt für die einzelnen Bremsgruppen 22 bis 25 entsprechend den bekannten Erwärmungs- und Abkühlungsgesetzmäßigkeiten unter Berücksichtigung der Betätigungsstärken durch Integration über der Zeit ermittelt. Hierbei können besondere Temperaturfühler an den Reibungsbremsen 16 bis 19 entfallen oder sie können, wie vorstehend zu den Verschleißfühlern erwähnt, zu bestimmten Zeitpunkten zur Korrektur der theoretisch ermittelten Temperaturwerte dienen.

In Abänderung von der vorstehend beschriebenen Funktionsweise kann das anfängliche, starke Betätigen einer kühlen Bremsgruppe entfallen, die Steuervorrichtung 35 kann vielmehr derart ausgelegt sein, daß sie die Bremssignale für die einzelnen, zu betätigenden Bremsgruppen derart erstellt, daß an diesen stets bevorzugt verschleißgünstige, mittlere Bremsstärken eingesteuert werden. Das Erreichen des günstigen Temperaturbereiches kann hierdurch allerdings etwas verzögert werden.

Die Steuervorrichtung 35 erstellt die durch die Steuerleitungen 31 bis 34 auszusteuernden Bremssignale in Abhängigkeit des in der Leitung 14 bzw. 15 anstehenden Bremsanforderungssignals unter Berücksichtigung der Belastung der einzelnen Drehgestelle 4 bis 7 bzw. deren Radsätze 8 und/oder 9 anhand der ihr durch die Abwiegevorrichtungen 40 bis 43 durch die Meßleitungen 40 bis 47 zugeführten Fahrzeuglastsignale, derart, daß der Triebwagenzug 1 insgesamt stets entsprechend seiner Belastung korrekt abgebremst wird, wobei selbstverständlich an den einzelnen Bremsgruppen 22 bis 25 infolge der verschleiß- bzw temperaturabhängigen Betätigungssteuerung oftmals Abweichungen von der rein fahrzeuglastabhängig richtigen Betätigungsstärke auftreten können; diese Abweichungen gleichen sich jedoch, über alle Bremsgruppen 22 bis 25 des Triebwagenzuges betrachtet, vollständig aus. Die durch die Meßleitungen 40 bis 47 zugeführten, fahrzeuglastabhängigen Meßsignale können des weiteren dazu dienen, daß die ausgesteuerten Bremsstärken für jede Bremsgruppe auf einen unterhalb der ein Radblockieren ermöglichenden Bremsstärke liegenden Wert beschränkt werden. Stattdessen oder zusätzlich kann die Steuervorrichtung 35 eine elektronische Gleitschutzvorrichtung beinhalten, welche von den bereits erwähnten, nicht dargestellten Drehzahlfühlern angesteuert wird und welche die Steuervorrichtung 35 veranlaßt, bei Auftreten eines Gleitvorganges die Betätigung der betreffenden Bremsgruppe abzuschwächen oder kurzzeitig zu unterbrechen, derart, daß der Gleitvorgang abgefangen und ein Blockieren vermieden wird. Weiterhin kann, falls während eines Anfahrvorganges ein Schleudern bzw. Durchdrehen einzelner Radsätze vermittels der Drehzahlfühler angezeigt wird, wie bekannt die zugeordnete Bremsgruppe betätigt werden, wodurch durch Abbremsung der Schleudervorgang beendet wird.

Weiterhin ist es zweckmäßiog die Steuervorrichtung 35 derart auszubilden, daß die Bremssignale mit derart begrenzten Änderungsgradienten erstellt oder geändert werden, daß am Triebwagenzug 1 höchstens geringe Bremsrucke auftreten, die Bremsrucke also einen vorgegebenen Grenzwert nicht übersteigen, wodurch sich ein guter Fahrkomfort ergibt.

Selbstverständlich ist die Steuervorrichtung 35 auch derart auszubilden, daß sich eine Notbremsfunktion ergibt, welche bei Auftreten einer Notbremsung, die beispielsweise durch Betätigen von Notbremszugkästen durch Fahrgäste ausgelöst sein kann, die Steuervorrichtung 35 die Verschleiß- und temperaturabhängigen Begrenzungen und Steuerungseinrichtungen abschaltet und höchstens durch die Fahrzeuglast begrenzte, maximale Bremssignale an alle Bremsgruppen 22 bis 25 aussteuert.

In Abänderung vom vorbeschriebenen Ausführungsbeispiel kann selbstverständlich zwischen die Regelventile 26 bis 39 und den jeweils nachgeordneten Bremszylinder 21 ein nicht dargestelltes Relaisventil eingeordnet werden, welches vom mit kleinen Durchströmungsquerschnitten ausbildbaren Regelventil ansteuerbar ist und mit großen Durchströmungsquerschnitten die Druckbeaufschlagung des Bremszylinders steuert. Als Regelventil kann zweckmäßigerweise ein übliches Gleitschutzventil mit den drei Stellungen: Bremsdruck anheben, Bremsdruck halten, Bremsdruck senken, verwendet werden. Hierbei ist selbsverständlich ein von der Gleitschutzvorrrichtung anstehender Steuerbefehl "Bremsdruck halten" von einem Bremssignal der Steuervorrichtung 35 zum Absenken des Bremsdruckes überwindbar, um die Bremsen lösen zu können.

Es ist bekannt, daß bei Erreichen einer bestimmten Temperaturgrenze an den Reibwerkstoffen diese zerstört werden, diese Temperaturgrenze liegt selbstvertständlich höher als der vorstehend erwähnte Temperaturbereich, sie kann sich jedoch an dessen obere Grenze unmittelbar anschließen. Es ist zweckmäßig, die Steuervorrichtung 35 derart auszubilden, daß diese eine Bremsgruppe, in deren Reibungsbremse ein Reiborgan bzw. Reibklotz 20 die erwähnte Temperaturgrenze erreicht, sofort ganz abschaltet und dafür die Betätigung anderer, thermisch noch nicht voll ausgelasteter Bremsgruppen verstärkt oder unbetätigte Bremsgruppen betätigt. Die thermisch ausgelastete Reibungsbremse kann sich dann abkühlen und erholen.

Insgesamt ist festzustellen, daß vermittels der Steuervorrichtung 35 die Reibungsbremsen der einzelnen Bremsgruppe 22 bis 25 derart betrieben werden, daß unter Vermeiden thermischer Überlastungen sich an allen Bremsorganen bzw. Reibklötzen 20 ein gleichartiger Verschleißzustand einstellt, im Verschleißendzustand also alle Reibklötze 20 ohne Vergeudung unausgenutzten Reibmaterials auszuwechseln sind. Zudem wird erreicht, daß die Reiborgane bzw. Reibklötze möglichst in einem hinsichtlich minimalen Verschleißes günstigen Temperaturbereich bei hinsichtlich ebenfalls minimalen Verschleißes günstiger Pressung, nämlich mittleren Bremsstärken, betrieben werden. Hieraus ergibt sich ein insgesamt geringer Verschleiß, welcher in Verbindung mit der gleichmäßigen Abnutzung aller Reibklötze 20 zu langen Betriebszeiten der Bremseinrichtung führt, während welcher keine Reiborgane bzw. Bremsklötze 20 auszutauschen sind. Durch Vermeiden schwacher Bremsungen wird zudem ein Verglasen der Reibmaterialen vermieden, so daß auch keine verglasten Reiborgane bzw. Reibklötze auszutauschen sind und die geforderten Bremsstärken stets erreichbar sind.

**Bezugszeichenliste**

1. Triebwagenzug
2. Einzelfahrzeug
3. Einzelfahrzeug
4. Drehgestell
5. Drehgestell
6. Drehgestell
7. Drehgestell
8. Radsatz
9. Radsatz
10. Handgriff
11. Handgriff
12. Gebergerät
13. Gebergerät
14. Leitung
15. Leitung
16. Reibungsbremse
17. Reibungsbremse
18. Reibungsbremse
19. Reibungsbremse
20. Reibklotz
21. Bremszylinder
22. Bremsgruppe
23. Bremsgruppe
24. Bremsgruppe
25. Bremsgruppe

26. Regelventil
27. Regelventil
28. Regelventil
29. Regelventil
30. Druckmittelquelle
31. Steuerleitung
32. Steuerleitung
33. Steuerleitung
34. Steuerleitung
35. Steuervorrichtung
36. Meßleitung
37. Meßleitung
38. Meßleitung
39. Meßleitung
40. Abwiegevorrichtung
41. Abwiegevorrichtung
42. Abwiegevorrichtung
43. Abwiegevorrichtung
44. Meßleitung
45. Meßleitung
46. Meßleitung
47. Meßleitung

**Patentansprüche**

1. Bremseinrichtung für eine Vielzahl von Rädern aufweisende Schienenfahrzeuge oder Züge (1), wobei die den Rädern zugeordneten, vermittels Bremszylinder (21) zuspannbaren Reibungsbremsen (16 bis 19) in getrennt betätigbare Bremsgruppen (22 bis 25) unterteilt sind, mit einer Steuervorrichtung (35), welche als Bremsparameter ein Bremsanforderungssignal für das Schienenfahrzeug bzw. den Zug (1), die Temperatur und ggf.die Reibkraft und/oder einem Bremsdruck entsprechende Meßsignale wenigstens einer Reibungsbremse (16 bis 19) jeder Bremsgruppe (22 bis 25) verarbeitet und aus diesen für die einzelnen Bremsgruppen (22 bis 25) gesonderte, die Betätigungsstärke der jeweiligen Bremsgruppe (22 bis 25) steuernde Bremssignale erstellt, derart, daß durch wechselnde Betätigung bzw. Betätigungsstärke der einzelnen Bremsgruppen (22 bis 25) ein Übersteigen einer vorbestimmten Temperaturgrenze an jeder Bremsgruppe (22 bis 25) vermieden und zugleich als Summe der Bremswirkungen der einzelnen Bremsgruppen (22 bis 25) eine dem Bremsanforderungssignal entsprechende Gesamtbremswirkung erreicht wird, dadurch gekennzeichnet, daß die Reibungsbremsen (16 bis 19) Reibwerkstoffe aufweisen, die innerhalb eines über ca. 100°C liegenden, bestimmten Temperaturbereiches minimale spezifische Verschleißwerte aufweisen, daß die Steuervorrichtung (35) die Bremssignale zumindest während eines ununterbrochenen Bremsvorganges derart erstellt, daß an den Reibungsbremsen (16 bis 19) aller betätigten Bremsgruppen (22 bis 25) eine innerhalb des bestimmten, höchstens bis zu der Temperaturgrenze reichenden Temperaturbereiches liegende Temperatur erreicht und gehalten wird unter Vermeidung von schwachen, zu Verglasungen der Reibwerkstoffe führenden Betätigungen, daß eine Hilfsvorrichtung zum Ermitteln des Verschleißzustandes wenigstens einer Reibungsbreme (16 bis 19) einer jeden Bremsgruppe (22 bis 25) vorgesehen ist, wobei die Steuervorrichtung (35) eine Auswahleinrichtung beinhaltet, welche der Betätigung einer geringer verschlissene Reibungsbremsen (16 bis 19) aufweisenden Bremsgruppe (22 bis 25) Priorität vor der Betätigung einer stärker verschlissene Reibungsbremsen aufweisenden Bremsengruppe verleiht, und daß die Druckmittelbeaufschlagung der Bremszylinder (21) jeder Bremsgruppe (22 bis 25) von einem Regelventil (26 bis 29), gegebenenfalls über ein Relaisventil, gesteuert ist, wobei das Regelventil seinerseits von den Bremssignalen der Steuervorrichtung (35) gesteuert ist.

2. Bremseinrichtung nach Anspruch 1, dadurch gekennzeichnet, daß jede Bremsgruppe (22 bis 25) zumindest die Reibungsbremsen (16 bis 19) zweier gleichachsiger Räder (8;9), vorzugsweise aller Räder eines Drehgestells (4 bis 7) oder bei Zügen der Räder eines Schienenfahrzeuges, umfaßt.

3. Bremseinrichtung nach Anspruch 1 oder 2, dadurch gekennzeichnet, daß das Regelventil (26 bis 29) ein Gleitschutzventil mit den drei Stellungen - Bremszylinderdruck anheben - Bremszylinderdruck halten - Bremszylinderdruck senken - ist.

4. Bremseinrichtung nach Anspruch 1,2 oder 3, dadurch gekennzeichnet, daß die Hilfsvorrichtung an den Reibungsbremsen (16 bis 19) angeordnete Verschleißfühler aufweist, die Verschleiß-Meßsignale an die Steuervorrichtung (35) abgibt.

5. Bremseinrichtung nach Anspruch 1,2 oder 3, dadurch gekennzeichnet, daß der Steuervorrichtung (35) eine Integrationsvorrichtung zugehört, welche den momentanen Verschleißzustand durch Integration entsprechend bremsstärkenabhängiger Verschleißparameter über der Betätigungszeit ermittelt.

6. Bremseinrichtung nach Anspruch 4 und 5, dadurch gekennzeichnet, daß die Verschleißfühler nur in größeren, zeitlichen Abständen, vorzugsweise in Abhängikeit von der Inbetriebnahme der Bremseinrichtung bzw. des Fahrzeuges oder Zuges (1), zu Bremsbeginn oder uhrgesteuert wenigstens einmal je Tag, zur Abgabe von Verschleiß-Meßsignalen kurzzeitig aktiviert werden, und daß diese Verschleiß-Meßsignale eine Korrektur des von der Integrationsvorrichtung ermittelten, momentanen Verschleißzustandes bewirken.

7.  Bremseinrichtung nach Anspruch 6, dadurch gekennzeichnet, daß die Steuervorrichtung (35) bei Auftreten der Verschleiß-Meßsignale eine verschleißabhängige Betätigungs-Reihenfolge für die Bremsgruppen (22 bis 25) erstellt, welche in Abhängigkeit von den momentanen Temperaturen an den Reibungsbremsen (16 bis 19) der einzelnen Bremsgruppen (22 bis 25) derart abänderbar ist, daß bei Überschreiten des bestimmten Temperaturbereiches an den Reibungsbremsen (16 bis 19) einer bevorzugt zu betätigenden Bremsgruppe (22 bis 25) die Betätigung dieser Bremsgruppe bis zu ihrer Abkühlung in den Temperaturbereich beendet und stattdessen die Betätigung einer nachfolgend zu betätigenden Bremsgruppe begonnen oder entsprechend verstärkt wird.

8.  Bremseinrichtung nach einem oder mehreren der vorstehenden Ansprüche, dadurch gekennzeichnet, daß der Steuervorrichtung (35) eine Integrationsvorrichtung zugehört, welche die momentane Temperatur der Reibungsbremsen (16 bis 19) der einzelnen Bremsgruppen (22 bis 25) entsprechend den Erwärmungs- und Abkühlungsgesetzmäßigkeiten durch Integration über der Zeit ermittelt.

9.  Bremseinrichtung nach einem oder mehreren der vorstehenden Ansprüche, dadurch gekennzeichnet, daß die Steuervorrichtung die Bremssignale für die einzelnen Bremsgruppen (22 bis 25) derart erstellt, daß an den Bremsgruppen (22 bis 25) bevorzugt verschleißgünstige, mittlere Bremsstärken eingesteuert werden.

10. Bremseinrichtung nach einem oder mehreren der vorstehenden Ansprüche, dadurch gekennzeichnet, daß die Steuervorrichtung (35) die Bremssignale derart erstellt, daß die Bremsstärke an jeder Bremsgruppe (22 bis 25) auf einen unterhalb der ein Radblockieren ermöglichenden Bremsstärke liegenden Wert begrenzt ist.

11. Bremseinrichtung nach einem oder mehreren der vorstehenden Ansprüche, dadurch gekennzeichnet, daß die Steuervorrichtung (35) die Bremssignale mit derart begrenztem Änderungsgradienten erstellt oder ändert, daß höchstens auf einen vorgegebenen Grenzwert begrenzte Bremsrucke an den Schienenfahrzeugen bzw. Zügen (1) auftreten.

12. Bremseinrichtung nach einem oder mehreren der vorstehenden Ansprüche, dadurch gekennzeichnet, daß die Steuervorrichtung (35) eine Notbremseinrichtung beinhaltet, welche bei Auftreten einer Notbremsung die Steuervorrichtung (35) unter Abschalten verschleiß-oder temperaturabhängiger Begrenzungen auf die Abgabe von eine maximale Bremsung bewirkenden Bremssignalen schaltet.

## Claims

1.  Braking device for railway vehicles or trains (1) having a plurality of wheels, the friction brakes (16 to 19), which are associated with the wheels and can be clamped by means of brake cylinders (21), being divided into separately actuatable braking groups (22 to 25), having a control device (35) which processes as brake parameters a brake requirement signal for the rail vehicle or the train (1), the temperature, and possibly the friction force and/or measurement signals corresponding to a brake pressure, of at least one friction brake (16 to 19) of each braking group (22 to 25), and from these produces separate braking signals controlling the actuation force of the respective braking group (22 to 25) for the individual braking groups (22 to 25), in such a way that by changing actuation or actuation force of the individual braking groups (22 to 25) it is possible to avoid exceeding a predetermined temperature limit in each braking group (22 to 25) and at the same time a total braking effect corresponding to the braking requirement signal is achieved as the sum of the braking effects of the individual braking groups (22 to 25), characterised in that the friction brakes (16 to 19) have friction materials which have minimum specific wear values within a specific temperature range above about 100°C, in that the control device (35) produces the braking signals at least during an uninterrupted braking procedure so that at the friction brakes (16 to 19) of all the actuated braking groups (22 to 25) a temperature within the specific temperature range, at the most up to the temperature limit, is reached and held, thus avoiding low-power actuations which lead to glazing of the friction materials, in that an auxiliary device for determining the state of wear of at least one friction brake (16 to 19) of each braking group (22 to 25) is provided, the control device (35) containing a selection device which gives priority to the actuation of a braking group having less worn friction brakes (16 to 19) over the actuation of a braking group having more worn friction brakes, and in that the pressure-medium action of the braking cylinder (21) of each braking group (22 to 25) is controlled by a control valve (26 to 29) possibly by means of a relay valve, the control valve in turn being controlled by the braking signals of the control device (35).

2. Braking device according to claim 1, characterised in that each braking group (22 to 25) includes at least the friction brakes (16 to 19) of two coaxial wheels (8; 9), preferably of all the wheels of a bogie (4 to 7) or in trains the wheels of a railway vehicle.

3. Braking device according to claim 1 or 2, characterised in that the control valve (26 to 29) is an anti-skid valve with the three positions; "raise brake cylinder pressure", "maintain brake cylinder pressure", "reduce brake cylinder pressure".

4. Braking device according to claim 1, 2 or 3, characterised in that the auxiliary device has wear sensors arranged on the friction brakes (16 to 19) which emit wear measurement signals to the control device (35).

5. Braking device according to claim 1, 2 or 3, characterised in that associated with the control device (35) is an integration device which determines the instantaneous state of wear by integration in accordance with brake-force-dependent wear parameters over the actuation time.

6. Braking device according to claim 4 and 5, characterised in that the wear sensors are only activated for a short time at fairly large time intervals, preferably in dependence on the start of operation of the braking device or of the vehicle or train (1), at the beginning of braking or timed at least once a day, to give off wear-measurement signals, and in that these wear-measurement signals cause a correction of the instantaneous state of wear determined by the integration device.

7. Braking device according to claim 6, characterised in that when wear-measurement signals appear the control device (35) produces a wear-dependent actuation sequence for the braking groups (22 to 25) which can be changed in dependence on the instantaneous temperatures in the friction brakes (16 to 19) of the individual braking groups (22 to 25) so that when the predetermined temperature range is exceeded at the friction brakes (16 to 19) of a braking group (22 to 25) preferably to be actuated the actuation of this braking group is ended until it cools down to the temperature range and instead the actuation of a braking group to be subsequently actuated is begun or correspondingly increased.

8. Braking device according to one or more of the above claims, characterised in that associated with the control device (35) is an integration device which determines the instantaneous temperature of the friction brakes (16 to 19) of the individual braking groups (22 to 25) according to the heating and cooling behaviour by integration over time.

9. Braking device according to one or more of the above claims, characterised in that the control device produces the braking signals for the individual braking groups (22 to 25) in such a way that preferably wear-favourable medium brake forces are brought about at the braking groups (22 to 25).

10. Braking device according to one or more than one of the above claims, characterised in that the control device (35) produces the braking signals in such a way that the braking force at each braking group (22 to 25) is limited to a value below the braking force which makes wheel locking possible.

11. Braking device according to one or more than one of the above claims, characterised in that the control device (35) produces or changes the braking signals with change gradients limited in such a way that jerky braking actions occurring on the railway vehicles or trains (1) are restricted at the most to a predetermined limit value.

12. Braking device according to one or more than one of the preceding claims, characterised in that the control device (35) contains an emergency braking device which, when emergency braking occurs, switches the control device (35) to the emission of braking signals causing maximum braking by switching off wear-or temperature-dependent limitations.

## Revendications

1. Installation de freinage pour des véhicules sur rails ou des trains (1) à grand nombre de roues, du type dans laquelle les freins à friction (16 à 19) qui sont associés aux roues et qui sont susceptibles d'être serrés à l'aide de cylindres de frein (21), sont subdivisés en groupes de freins (22 à 25) susceptibles d'être actionnés séparément, laquelle installation de freinage comporte un dispositif de commande (35) qui traite, en tant que paramètre de freinage, un signal de demande de freinage pour le véhicule sur rails ou pour le train (1), des signaux de mesure qui correspondent à la température et éventuellement à la force de friction et/ou à une pression de freinage d'au moins un frein à friction (16 à 19) de chaque groupe de freins (22 à 25) et qui élabore à partir de ceux-ci et pour les différents groupes de frein (22 à 25) des signaux de freinage distincts, qui commandent la force d'actionnement des groupes de freins correspondants (22 à 25) de façon que pour l'actionnement alterné ou par la force d'actionnement alternée des différents groupes de freins (22 à 25) soit évité le dépassement d'une limite de température prédéterminée au niveau de chaque groupe de freins (22 à 25) et obtenu, comme somme des effets de freinage des différents groupes de freins (22 à 25), un effet de freinage total qui correspond au signal de demande de freinage, caractérisée par le fait que les freins à friction (16 à 19) comportent des matériaux de frottement ou de friction qui présentent, dans une plage de température prédéterminée, se situant au-delà d'environ 100° C, des valeurs d'usure spécifiques minimales, que le dispositif de commande (35) élabore, au moins pendant une opération de freinage ininterrompue, les signaux de freinage de telle façon que soit atteinte et maintenue, au niveau des freins à friction (16 à 19) de tous les groupes de freins (22 à 25) qui ont été actionnés, une température qui se situe à l'intérieur de la plage de température s'étendant au plus jusqu'à la limite de la température, tout en évitant de faibles manoeuvres entraînant des vitrifications des matériaux de friction, qu'il est prévu un dispositif auxiliaire pour déterminer l'état d'usure, d'au moins un frein à friction (16 à 19) de chaque groupe de freins (21 à 25), ledit dispositif de commande (35) comportant un dispositif de sélection qui confère à l'actionnement d'un groupe de freins (22 à 25) incluant des freins de friction (16 à 19) à moindre usure, la priorité par rapport à l'actionnement d'un groupe de freins incluant des freins de friction à plus forte usure, et que la charge en milieu sous pression des cylindres de frein (21) de chaque groupe de frein (22 à 25) est commandée par une soupape de réglage (26 à 29), éventuellement par l'intermédiaire d'une soupape de relais, ladite soupape de réglage étant, à son tour, commandée par les signaux de freinage du dispositif de commande (35).

2. Installation de freinage selon la revendication 1, caractérisée par le fait que chaque groupe de freins (22 à 25) comprend au moins les freins à friction (16 à 19) de deux roues (8, 9) à essieu commun, de préférence de toutes les roues d'un bogie (4 à 7), ou dans le cas de trains, des roues d'un véhicule sur rails.

3. Installation de freinage selon la revendication 1 ou 2, caractérisée par le fait que la soupape de réglage (16 à 29) est une soupape anti-enrayage possédant les trois positions -augmenter la pression dans le cylindre de frein-maintenir la pression dans le cylindre de frein -abaisser la pression dans le cylindre de, frein-.

4. Installation de freinage selon la revendication 1, 2 ou 3, caractérisée par le fait que le dispositif auxiliaire comporte des détecteurs d'usure disposés sur les freins à friction (16 à 19) et émettant au dispositif de commande (35) des signaux de mesure de l'usure.

5. Installation de freinage selon la revendication 1, 2 ou 3, caractérisée par le fait qu'au dispositif de commande (35) appartient un dispositif d'intégration qui détermine l'état d'usure instantané par intégration, sur la durée d'actionnement, en fonction des paramètres de l'usure qui dépendent des forces de freinage.

6. Installation de freinage selon les revendications 4 et 5, caractérisée par le fait que les détecteurs de l'usure sont, pour émettre des signaux de mesure de l'usure, activés pour de courtes durées et à des intervalles importants, de préférence en fonction de la mise en service de l'installation de freinage respectivement du véhicule ou du train (1), au début du freinage ou sous commande horaire, et que ces signaux de mesure de l'usure provoquent une correction de l'état d'usure instantanée, déterminé par le dispositif d'intégration.

7. Installation de freinage selon la revendication 6, caractérisée par le fait que le dispositif établit, à l'apparition des signaux de mesure de l'usure, pour les groupes de freins (22 à 25) une suite ou un ordre d'actionnement qui est fonction de l'usure, lequel ordre d'actionnement est modifiable de telle façon en fonction des températures instantanées des freins de friction (16 à 19) des différents groupes de freins (22 à 25), que lors du dépassement de la plage de température déterminée des freins de friction (16 à 19) d'un groupe de freins (22 à 25) à actionner de façon préférentielle, l'actionnement de ce groupe de freins soit terminé jusqu'à son refroidissement dans la plage de températurte et qu'à sa place débute ou est amplifié l'actionnement d'un groupe de freins suivant à actionner.

8. Installation de freinage selon une ou plusieurs des revendications précédentes, caractérisée par le fait qu'au dispositif de commande (35) appartient un dispositif d'intégration qui intègre sur le temps la température instantanée des freins de friction (16 à 19) des différents groupes de freins (22 à 25) en fonction des lois correspondantes qui régissent l'échauffement et le refroidissement.

9. Installation de freinage selon une ou plusieurs des revendications précédentes, caractérisée par le fait que le dispositif de commande élabore les signaux de freinage pour les différents groupes de freins (22 à 25) de telle façon qu'au niveau des groupes de freins (22 à 25), de préférence, des forces de freinage moyens et favorables de point de vue de l'usure, sont ajustées.

10. Installation de freinage selon une ou plusieurs des revendications précédentes, caractérisée par le fait que le dispositif de commande (35) élabore les signaux de freinage de telle façon que la force de freinage, au niveau de chaque groupe de freins (22 à 25), est limitée à une valeur qui se situe en-dessous d'une force de freinage qui rendrait possible un blocage de roue.

11. Installation de freinage selon une ou plusieurs des revendications précédentes, caractérisée par le fait que le dispositif de commande (35) élabore ou modifie de telle façon des signaux de freinage avec des gradiants de modifications limités, qu'au plus apparaissent, au niveau des véhicules sur rails ou des trains (1), des pressions de freinage limitées à une valeur limite prédéterminée.

12. Installation de freinage selon une ou plusieurs des revendications précédentes, caractérisée par le fait que le dispositif de commande (35) comporte un dispositif de freins d'urgence qui, à l'apparition d'un freinage d'urgence, commute le dispositif de commande sur l'émission de signaux qui provoquent un freinage maximum, avec débranchement des limitations qui sont fonction de l'usure ou de la température.